# EUROPÄISCHE PATENTSCHRIFT

(11) **EP 0 661 328 B1**
(45) Veröffentlichungstag und Bekanntmachung des Hinweises auf die Patenterteilung: **12.04.2000**
(21) Anmeldenummer: 94119986.1
(22) Anmeldetag: 16.12.1994
(51) Int. Cl.: C08G 71/04, C08L 63/00, C08G 59/40, C08G 59/18

(54) **Neue Epoxid-Amin-Addukte als Härter für wässrige Epoxidsysteme**
New epoxide-amine adducts as hardeners for aqueous epoxide systems
Nouveaux produits d'addition d'amine et d'epoxy comme durcisseurs pour system epoxy aqueux

(30) Priorität: 24.12.1993 DE 4344487
(43) Veröffentlichungstag der Anmeldung: 05.07.1995
(73) Patentinhaber: HOECHST AKTIENGESELLSCHAFT, 65926 Frankfurt am Main (DE)
(72) Erfinder: Pfeil, Armin, Dr., D-65205 Wiesbaden (DE); Hönel, Michael, Dr., D-65189 Wiesbaden (DE); Petri, Stefan, D-65232 Taunusstein (DE)
(74) Vertreter: Zounek, Nikolai, Dipl.-Ing.

(56) Entgegenhaltungen:
- EP-A- 0 149 156
- EP-A- 0 234 395
- EP-A- 0 247 506
- EP-A- 0 395 122
- WO-A-93/21251

## Beschreibung

Aufgrund immer strenger werdender Umweltschutzauflagen gewinnen wäßrige Systeme zur Beschichtung von Gegenständen zunehmend an Bedeutung. Sie müssen sich in ihren Eigenschaften an konventionellen, d.h. Lösemittel-haltigen Systemen messen lassen. Wasserverdünnbare Epoxidharzsysteme haben zunehmend unter den kalthärtenden "Wasserlacken" an Bedeutung gewonnen. Diese 2K-Systeme weisen hervorragende Eigenschaften auf. Hervorzuheben sind folgende positive Eigenschaften: Kein oder nur geringer Lösemittelanteil, nicht feuergefährlich, keine oder nur geringe Geruchsbelästigung, leichte Verarbeitbarkeit, geringe Empfindlichkeit gegenüber feuchten Untergründen, gute Trocknung und schnelle Durchhärtung, exzellente Haftung auf den meisten Substraten, sehr gute Zwischenschichthaftung, guter Korrosionsschutz bei Metallen und leichte Reinigung der Arbeitsgeräte direkt nach Gebrauch.

So zeigen insbesondere nichtionisch dispergierte Epoxidharzsysteme, wie sie in DE-A 3 643 751 beschrieben sind, mit in EP-A 0 000 605 genannten wäßrigen Härtern auf Amin-Basis diese hervorragenden Eigenschaften so daß sie als Beschichtungsmittel vielseitige Verwendung finden. Nachteilig an diesen Systemen ist allerdings, daß sie bei bestimmten Lackanwendungen keine störungsfreien Oberflächen erzeugen. Weiterhin ist es bisher nicht möglich, mit wäßrigen 2K-Systemen, wegen der hervorragenden Eigenschaften bevorzugt auf der Basis von Epoxidharzen, Grundierungen und Füller zu erzeugen, welche nach kurzer Trocknung naß oder gar trocken schleifbar sind. In der Regel sind die untersuchten Systeme viel zu weich, das Schleifpapier setzt sich durch die ausgeprägte Thermoplastizität nach kurzer Zeit zu und die Oberfläche wird geschädigt.

Aus der EP-A 0 395 122 sind Elektrotauchlacke bekannt, die Aminourethane enthalten. Sie können mit niedermolekularen Polyepoxiden gehärtet werden. In der EP-A 0 247 506 sind Abmischungen von Aminourethanen und Epoxidharzen beschrieben.

Die vorliegende Erfindung beschreibt den Einbau von an sich bekannten und anderweitig verwendeten Verbindungen (EP-A 0 234 395), welche zum einen hydrolyseunempfindliche Urethanstrukturen aufweisen und zur Verbesserung der Oberflächenqualität beitragen, und welche außerdem durch ihren speziellen chemischen Aufbau sehr gut schleifbare Filme ergeben, in wäßrige Härter auf der Basis Epoxid-Amin-Addukt.

Gegenstand der Erfindung sind wasserverdünnbare Epoxid-Amin-Addukte, erhältlich durch Umsetzung von
(A) Aminourethanen, die durch Umsetzung von
   (a1) oligomeren oder polymeren Verbindungen, welche mindestens eine endständige 2-Oxo-1,3-dioxolangruppe enthalten, und
   (a2) Verbindungen, die mindestens eine primäre Aminogruppe enthalten, erhalten werden, wobei das Verhältnis der Zahl der 2-Oxo-1,3-dioxolangruppen zu der der primären Aminogruppen 1:10 bis 1:1,1 beträgt,
(B) hydrophilen Epoxidharzen, die Kondensationsprodukte aus
   (b1) einem Polyol mit einer gewichtsmittleren Molmasse M_{w} von 200 bis 20 000 g/mol und
   (b2) einer Epoxidverbindung mit mindestens zwei Epoxidgruppen pro Molekül und einer Molmasse, dividiert durch die Zahl der Epoxidgruppen, (Epoxidäquivalentgewicht)von 100 bis 2000 g/mol,
   wobei das Verhältnis der Zahl der OH-Gruppen zur Zahl der Epoxidgruppen 1:3,51 bis 1:10 beträgt, und das Epoxidäquivalentgewicht dieser Kondensationsprodukte zwischen 150 g/mol und 8000 g/mol liegt, sowie gegebenenfalls
(C) Aminen mit mindestens einer primären Aminogruppe.

Die Polyamine (a2) haben vorzugsweise die Formel 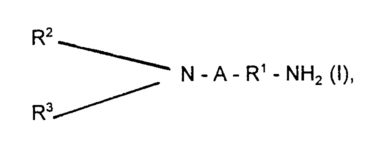 in der bedeuten
- R¹: einen zweiwertigen Kohlenwasserstoffrest, vorzugsweise einen geradkettigen oder verzweigten Alkylenrest mit 2 bis 18, vorzugsweise 2 bis 4 C-Atomen,
- R²: Wasserstoff, Alkyl mit 1 bis 8 C-Atomen, vorzgusweise 1 bis 4 C-Atomen oder Hydroxyalkyl mit 1 bis 8 C-Atomen, vorzugsweise 1 bis 2 C-Atomen im Alkylrest,
- R³: einen Rest aus der gleichen Gruppe wie R², wobei R² und R³ auch eine cyclische Ringverbindung, vorzugsweise einen 5-, 6- oder 7-gliedrigen aliphatischen Ring ergeben können
oder, wenn R² Wasserstoff ist, R³ außerdem auch eine Gruppe der Formeln
C₁ bis C₁₈-Alkyl-COO-CH₂-CH(OH)-CH₂-,
C₁ bis C₁₈-Alkyl-O-CH₂-CH(OH)-CH₂-,
NC-CH₂-CH₂- oder
C₁ bis C₁₈-Alkyl-CHOH-CH₂-,
bedeuten kann und A eine chemische Bindung oder -(R¹-NH)ᵣ-R¹NH ist, worin r Null oder eine ganze Zahl von 1 bis 6 ist und R¹ die obige Bedeutung hat.

Gegenstand der Erfindung sind weiterhin Härtungsmittel für Epoxidharze bei Raumtemperatur oder für forcierte Trocknung, enthaltend ein Addukt aus den o.g. Aminourethanen (A), ggf. im Gemisch mit weiteren Polyaminen (a2), mit hydrophilen Epoxidharzen (B), welche dadurch gekennzeichnet sind, daß diese Epoxidharze bestehen aus Kondensationsprodukten aus einem Polyol mit einer gewichtsmittleren Molmasse (Mw) von 200 bis 20000 g/mol und einer Epoxidverbindung mit mindestens zwei Epoxidgruppen pro Molekül und einer Molmasse, dividiert durch die Zahl der Epoxygruppen ("Epoxidäquivalentgewicht") von 100 bis 2000 g/mol, wobei das Verhältnis der Zahl der OH-Gruppen zu der der EP-Gruppen 1:3,51 bis 1:10, vorzugsweise 1:4 bis 1:8 beträgt und das Epoxidäquivalentgewicht dieser Kondensationsprodukte zwischen 150 g/mol und mindestens 8000 g/mol, bevorzugt zwischen 250 g/mol und 1000 g/mol liegt.

Gegenstand der Erfindung sind weiterhin Verfahren zur Herstellung dieser neuartigen Epoxid-Amin-Addukte.

Die in Frage kommenden Aminourethane (A) sind in EP-A 0 234 395 beschrieben worden, finden dort aber bevorzugt Anwendung als flexibilisierende Bindemittel, welche nach Teilneutralisation mit organischen und anorganischen Säuren für die Elektrotauchlackierung eingesetzt werden. Dort wird auch die Verwendung in Kombination mit für fremdvernetzende 2K-Lacke üblichen Härtern wie verkappten Isocyanaten, β-Hydroxyestern von mindestens bifunktionellen Polycarbonsäuren, Umsetzungsprodukten von Malonsäuredialkylestern mit Aldehyden und Ketonen, Umesterungshärtern und Michael-Additionsprodukten genannt, nicht aber die Verwendung zur Herstellung wasserverdünnbarer Epoxid-Amin-Addukte als wäßrige Härter für wäßrige Epoxidharzsysteme.

Die Verbindungen (A) können für sich allein oder aber bevorzugt in Kombination mit üblichen Polyaminen (a2) an hydrophile Epoxidharze addiert und in dieser Form als Härterkomponente für wäßrige Epoxidharz-Zubereitungen, wie sie z.B. in DE-A 3 643 751 beschrieben sind, eingesetzt werden. Überraschenderweise werden dabei die zuvor genannten günstigen Eigenschaften (verbesserte Oberfläche und Schleifbarkeit) erreicht, ohne daß die bisherigen guten Eigenschaften der wäßrigen 2K-Epoxidsysteme beeinträchtigt werden. Es liegt also eine Kombination der hervorragenden Eigenschaften der Aminourethane (A) mit den wäßrigen Polyaminhärtern, z.B. gemäß EP-A 0 000 605, vor.

Als Komponente (a1) kommen in Frage sämtliche Carbonate, welche durch Umsetzung von Kohlendioxid mit Epoxidverbindungen nach bekannter Art und Weise (siehe z.B. WO-84/03 701, DE-A 35 29 263 und DE-A 36 00 602) erhalten werden können. Vorzugsweise handelt es sich bei diesen Epoxidverbindungen um Polyglycidyläther auf Basis von mehrwertigen, vorzugsweise zweiwertigen Alkoholen, Phenolen, Hydrierungsprodukten dieser Phenole und/oder von Novolaken (Umsetzungsprodukte von ein- oder mehrwertigen Phenolen mit Aldehyden, insbesondere Formaldehyd in Gegenwart saurer Katalysatoren). Die Epoxidäquivalentgewichte dieser Epoxidverbindungen liegen vorzugsweise zwischen 100 und 2000, insbesondere zwischen 100 und 350 g/mol.

Als mehrwertige Phenole sind beispielsweise zu nennen: Resorcin, Hydrochinon, 2,2-Bis-(4'-hydroxyphenyl)-propan (Bisphenol A), Isomerengemische des Dihydroxydiphenylmethans (Bisphenol F), Tetrabrombisphenol A, 4,4'-Dihydroxydiphenylcyclohexan, 4,4'-Dihydroxy-3,3'-dimethyldiphenylpropan, 4,4'-Dihydroxydiphenyl, 4,4'-Dihydroxybenzophenon, Bis-(4'-hydroxyphenyl)-1,1-ethan, 2,2-Bis[4'-(2''-Hydroxypropoxy)phenyl]-propan, Bis-(4'-hydroxyphenyl)-1,1-isobutan, 2,2-Bis-(4'-hydroxy-tert.-butylphenyl)-propan, Bis-(2-hydroxynaphthyl)-methan, 1,5-Dihydroxynaphthalin, Tris-(4-hydroxyphenyl)-methan, Bis-(4-hydroxyphenyl)äther, Bis-(4-hydroxyphenyl)sulfon u. a. sowie die Halogenierungs- und Hydrierungsprodukte der vorstehend genannten Verbindungen. Bisphenol A ist hierbei besonders bevorzugt.

Als Beispiele für mehrwertige Alkohole seien Äthylenglykol, Diäthylenglykol, Triäthylenglykol, Polyäthylenglykole (n = 4 bis 35), 1,2-Propylenglykol, Polypropylenglykole (n = 2 bis 15), 1,3-Propylenglykol, 1,4-Butandiol, 1,5-Pentandiol, 1,6-Hexandiol, 1,2,6-Hexantriol, Glycerin, Neopentylglykol, Trimethylolethan und Trimethylolpropan genannt. Polyäthylenglykole (n = 8 - 10) sind hierbei besonders bevorzugt.

Eine ausführliche Aufzählung geeigneter Epoxidverbindungen findet sich in dem Handbuch "Epoxidverbindungen und Epoxidharze" von A.M. Paquin, Springer Verlag, Berlin 1958, Kapitel IV und in Lee, Neville, "Handbook of Epoxy Resins", Mc Graw-Hill Book Co., 1967, Chapter 2. Die genannten Epoxidverbindungen können einzeln oder im Gemisch eingesetzt werden.

Als Amin-Komponente (a2) kommen sämtliche Amine, vorzugsweise Polyamin-Verbindungen in Frage, welche zur Reaktion mit den Carbonatgruppen von (a1) befähigte primäre Aminogruppen enthalten; es kann sich dabei um Polyamine, Amin-Epoxid-Addukte als auch modifizierte Derivate hiervon handeln.

Als Beispiele für Polyamine sind zu nennen Alkylenamine wie Ethylendiamin, Propylendiamin, Polyalkylenamine, wie Diäthylentriamin, Triäthylentetramin, Tetraäthylenpentamin, Pentaäthylenhexamin, Propylendiamin, Dipropylentriamin u.a., ferner 2,2,4- und/oder 2,4,4-Trimethylhexamethylendiamin, Bis-(3-aminopropyl)-amin, N,N-Bis(3-aminopropyl)-äthylendiamin, Neopentandiamin, 2-Methyl-1,5-pentandiamin, 1,3-Diaminopentan, Hexamethylendiamin u.a., sowie cycloaliphatische Amine wie 1,2- bzw. 1,3-Diaminocyclohexan, 1,4-Diamino-3,6-diäthylcyclohexan, 1,2-Diamino-4-äthylcyclohexan, 1,4-Diamino-3,6-diäthylcyclohexan, 1-Cyclohexyl-3,4-diaminocyclohexan, 1,4-Bis-(3'-aminopropyl)-piperazin, Isophorondiamin und Umsetzungsprodukte davon, 4,4'-Diaminodicyclohexylmethan und -propan, 2,2-Bis(4-aminocyclohexyl)-methan und -propan, 3,3'-Dimethyl-4,4'-diaminodicyclohexylmethan, 3-Amino-1-cyclohexyl-aminopropan, 1,3-und 1,4-Bis-(aminomethyl)-cyclohexan.

Als araliphatische Amine werden insbesondere solche eingesetzt, bei denen aliphatische Aminogruppen vorhanden sind, z.B. meta- und para-Xylylendiamin oder deren Hydrierungsprodukte.

Die genannten Amine können allein oder als Gemische verwendet werden. Auf alle Fälle sollte die Auswahl der Amine so erfolgen, daß im Endprodukt mindestens eine, vorzugsweise jedoch mehr als eine freie primäre Aminogruppe enthalten ist.

Als Amin-Epoxid-Addukte kommen beispielsweise Umsetzungsprodukte von Polyaminen, wie z.B. Äthylendiamin, Propylendiamin, Hexamethylendiamin, 2,2,4- und 2,4,4-Trimethylhexamethylendiamin, meta-Xylylendiamin und/oder Bis-(aminomethyl)-cyclohexan mit endständigen Mono- oder Polyepoxiden, wie z.B. Propylenoxid, Hexenoxid, Cyclohexenoxid, oder mit Glycidyläthern wie Phenylglycidyläther, tert.-Butylglycidyläther, Äthylhexylglycidyläther, Butylglycidyläther oder mit Glycidylestern, wie dem von der Firma Shell vertriebenen Glycidylester der Versaticsäure, Cardura E, oder den zuvor genannten Polyglycidyläthern und -estern in Betracht.

Es können auch neben den oben genannten Polyaminen wasserlösliche Polyoxyalkylendi-und -polyamine mit Molmassen von 100 bis 2000 g/mol, z.B. die von der Firma Texaco unter dem Warenzeichen Jeffamine® vertriebenen Produkte, sowie leicht in Wasser dispergierbare Härtungsmittel, wie sie z.B. in der DE-A 23 32 177 und der EP-A 0 000 605 beschrieben sind, also z.B. modifizierte Amin-Addukte, eingesetzt werden, um so die Hydrophilie und damit die Löslichkeit oder die Dispergierbarkeit der Aminourethane in Wasser oder wäßrigen Aminhärtern zu erhöhen.

Die Umsetzung der Komponenten (a1) und (a2) erfolgt im allgemeinen in den erforderlichen stöchiometrischen Verhältnissen nach üblichen Methoden bei erhöhten Temperaturen, gegebenenfalls unter Verwendung inerter Lösemittel. Die Umsetzung in Gegenwart von gegenüber der Cyclocarbonatgruppe inerten Lösungsmitteln stellt eine bevorzugte Verfahrensvariante dar. Bei der stöchiometrischen Bewertung der Ausgangsprodukte als auch der Endprodukte und zur Reaktionskontrolle werden die Aminzahl (Titration mit Perchlorsäure) und die Cyclocarbonat-Äquivalenzzahl (Titration mit Kaliumhydroxydlösung) zugrunde gelegt. Bei der Umsetzung der Komponenten (a1) und (a2) können die Polyaminoverbindungen einzeln oder als Gemische gleichzeitig oder zeitlich hintereinander der Reaktion zugeführt werden, gegebenenfalls gelöst in inerten Lösemitteln.

Es ist bei der Umsetzung darauf zu achten, daß solche Reaktions- und Verfahrensbedingungen eingehalten werden, unter denen die Cyclocarbonatgruppen der Komponente (a1) nur mit den primären Aminogruppen der Komponente (a2) reagieren können, was nach bekannten Methoden erreichbar ist, ohne daß auch entsprechende Reaktionen mit den evtl. vorhandenen sekundären Aminogruppen stattfinden, welche deutlich reaktionsträger sind. Außerdem ist zu vermeiden, daß durch zu hohe Temperaturen Urethanstrukturen von Polyalkylenpolyaminen zu cyclischen Harnstoffderivaten abspalten.

Als inerte Lösemittel kommen z.B. aromatische Kohlenwasserstoffe wie Xylol und Toluol, Alkohole wie Butanole, Pentanole und Glykoläther wie Methoxyethanol, Ethoxyethanol, Methoxypropanol, Butoxyethanol, Methoxybutanol, Glykoldimethyläther und Diglykoldimethyläther usw. in Frage. Bevorzugt sind solche Lösungsmittel zu wählen, welche sich nach erfolgter Reaktion leicht abdestillieren lassen oder später in der wäßrigen Formulierung nicht stören. Die Lösemittel sollten im letzteren Falle lediglich in einer Menge verwendet werden, die zur Erniedrigung der Viskosität auf ein handhabbares Maß ausreicht. Ester und Ketone sind aufgrund ihrer potentiellen Reaktivität gegenüber den Komponenten nur bedingt geeignet.

Die Reaktionstemperatur liegt im Bereich von 50 °C bis 150 °C, nach unten beschränkt durch Löslichkeit und Viskosität, nach oben durch Neigung zu Neben- und Folgereaktionen sowie Siedepunkt des Lösemittels. Bevorzugt arbeitet man zwischen 80 °C und 130 °C. Katalysatoren werden für diese Umsetzung nicht benötigt. So laufen Reaktionen zwischen Carbonaten und primären Aminen schon bei Raumtemperatur zügig ab; bei den beschriebenen Systemen sind allerdings höhere Temperaturen nötig, da die Produkte oft auch in Lösemitteln eine hohe Viskosität aufweisen.

Die gewählten Mengenverhältnisse (a1) : (a2) müssen gewährleisten, daß aminofunktionelle Reaktionsprodukte gebildet werden, welche über diese Funktionen zur Reaktion mit den Glycidylgruppen eines Epoxidharzes (B) befähigt sind. Diese sind vorzugsweise primäre Aminogruppen, von denen mindestens eine, besser aber mehrere pro Molekül des Aminourethans vorliegen sollten. Durch Variation des Mengenverhältnisses lassen sich Produkte von oligomerem bis hin zu polymerem Charakter gewinnen, wobei Oligomere besonders bevorzugt sind. Somit sind Mengenverhältnisse zwischen Carbonat (a1) und Polyamin (a2) im Bereich von 1 mol Polyamin (a2) pro mol Carbonat-Gruppen der Komponente (a1) für die Bildung Oligomerer einzusetzen.

Die auf diese Weise erhaltenen Aminourethane (A) werden für sich allein oder ggf. in Kombination mit weiteren Aminen (a2) mit wasserverdünnbaren Epoxidharzen (B) umgesetzt; die Reaktionsprodukte können als Härter für wäßrige Epoxidharzsysteme eingesetzt werden, vorzugsweise für die Härtung bei Raumtemperatur und/oder niedrigeren Temperaturen, im Allgemeinen im Molverhältnis Epoxidgruppen zu Aminwasserstoffatomen von 1 : 0,75 bis 1 : 2,0.

Bei den Polyepoxidverbindungen der Komponente (B) handelt es sich um die unter (a1) beschriebenen Verbindungen, nämlich bevorzugterweise von Polyglycidyläthern von mehrwertigen Alkoholen oder Phenolen (Polyolen).

Bei den Polyolen handelt es sich vorzugsweise um Polyätherpolyole (Polyalkylenglykole) mit gewichtsmittleren Molmassen (Mw; bestimmt durch Gelpermeationschromatographie mit Polystyrolstandard) von bevorzugt zwischen 600 und 12000, insbesondere 2000 bis 8000 g/mol und OH-Zahlen zweckmäßigerweise von 10 bis 600, bevorzugt 15 bis 120 mg KOH/g. Diese Polyätherpolyole besitzen vorzugsweise nur endständige, primäre OH-Gruppen. Beispielsweise seien hier Blockcopolymere aus Äthylenoxid und Propylenoxid sowie Polyäthylen-, Polypropylen-, Polybutylglykole genannt, wobei auch Gemische der jeweiligen Polyalkylenglykole eingesetzt werden können. Vorzugsweise werden Polyäthylenglykole verwendet. Es können aber auch die anderen unter (a1) genannten Polyole zum Einsatz kommen.

Die hydrophilen Kondensationsprodukte (B) werden derart aufgebaut, daß z.B. hydrophile Epoxidverbindungen (z.B. Polyäthylenglykoldiglycidyläther) mit hydrophoben Polyolen (z.B. Bisphenol A) oder vorzugsweise umgekehrt hydrophobe Epoxidverbindungen (z.B. Bisphenol A-Diglycidyläther) mit hydrophilen Polyolen (z.B. Polyäthylenglykol) umgesetzt werden. Hier sei auf die Schriften EP-A 0 000 605 und die DE-A 43 09 639 verwiesen, welche die Herstellung der hydrophilen Epoxidharze (B) ausführlich beschreiben.

Die erfindungsgemäßen Epoxid-Amin-Addukte können für sich alleine oder im Gemisch mit schon bekannten Aminen oder wäßrigen Härtern verwendet werden, in Frage kommen z.B. sämtliche unter (a2) genannten Amine, Epoxid-Amin-Addukte, Mannichbasen und Polyamidoamine, welche allein oder als Gemische verwendet werden können. Geeignete Mannich-Basen werden durch Kondensation von Polyaminen, vorzugsweise Diäthylentriamin, Triäthylentetramin, Isophorondiamin, 2,2,4- bzw. 2,4,4-Trimethylhexamethylendiamin, 1,3- und 1,4-Bis-(aminomethyl)-cyclohexan, insbesondere meta- und para-Xylylendiamin mit Aldehyden, vorzugsweise Formaldehyd, und ein- oder mehrwertigen Phenolen mit mindestens einer gegenüber Aldehyden reaktiven Kernposition, beispielsweise den verschiedenen Kresolen und Xylenolen, para-tert.-Butylphenol, Resorcin, 4,4'-Dihydroxydiphenylmethan, 2,2-Bis(4'-hydroxyphenyl)-propan, vorzugsweise aber Phenol hergestellt. Polyamidoamine, die zur Härtung der erfindungsgemäßen Epoxidharzdispersionen verwendet werden können, werden beispielsweise durch Umsetzung von Polyaminen mit Mono- oder Polycarbonsäuren, z.B. dimerisierten Fettsäuren, erhalten. Bevorzugt werden als Aminhärter neben den oben genannten Systemen wasserlösliche Polyoxyalkylendi- und -polyamine sowie leicht in Wasser dispergierbare Härtungsmittel, wie sie z.B. in EP 0 000 605 beschrieben sind, eingesetzt.

Die Herstellung der erfindungsgemäßen Härtungsmitteln kann nach vielen denkbaren Varianten erfolgen; alle diese Verfahren sind Gegenstand dieser Erfindung. Besonders bevorzugt und erwähnt seien die folgenden Varianten:
(I) Eine Polyepoxidverbindung gemäß (a1) wird vorgelegt und mit Kohlendioxid zum Carbonat (a1) umgesetzt. Nun erfolgt die Weiterreaktion mit einer ersten Menge eines Amins gemäß (a2), welche ggf. im Überschuß eingesetzt wird, in beschriebener Art und Weise zum Aminourethan (A), wobei ggf. geeignete inerte Lösemittel zugegen sind. Hierauf folgt ggf. die Zugabe einer zweiten Aminmenge, welche in ihrer Zusammensetzung gleich oder verschieden zur ersten Aminmenge sein kann. Das Produkt, welches ausschließlich aus Aminourethan (A) oder ggf. aus einem Gemisch von (A) und überschüssigen Aminen besteht, wird nun mit dem hydrophilen Epoxidharz (B) umgesetzt. Dabei muß gewährleistet werden, daß genügend freie Aminogruppen verbleiben, welche zur Härtung dienen.
(II) Isolierte Aminourethane (A) werden zusammen mit Aminen gemäß (a1) und ggf. geeigneten inerten Lösemitteln homogenisiert und mit einem Unterschuß an hydrophilem Epoxidharz (B) derart umgesetzt, daß für die Härtung ausreichend viele freie Aminogruppen übrig bleiben.
(III) Das hydrophile Epoxidharz (B) wird mit einem Überschuß an Polyaminen (a-2) umgesetzt und das mit nicht reagierten Aminen gemischte Epoxid-Amin-Addukt mit Carbonatverbindungen gemäß (a-1) wie beschrieben derart umgesetzt, daß genügend freie Aminogruppen für die Härtung verbleiben.

Die nach den verschiedenen Verfahren erhaltenen Urethangruppen-haltigen Epoxid-Amin-Addukte können nach Bedarf mit wasserverdünnbaren Lösemitteln und weiteren Härtungsmitteln versetzt werden, um ein geeignetes Härtungsmittel zu formulieren.

Als Epoxidharzkomponente für die Formulierung kalthärtender Bindemittel kommen sämtliche wäßrigen Epoxidharzsysteme in Betracht, wobei besonders die nichtionisch stabilisierten Festharzdispersionen, wie sie in DE-A 36 43 751 beschrieben sind, zu sehr guten Eigenschaften führen. Das Verhältnis von Aminogruppen zu Epoxidgruppen liegt in den entsprechenden Bindemitteln zwischen 5 : 1 und 1 : 5, bevorzugt zwischen 1,5 : 1 und 1 : 1,5.

Die Schleifbarkeit entsprechend formulierter Schleiffüller ist hervorragend und kann mit den bisher bekannten konventionellen oder wäßrigen Epoxidsystemen in dieser Güte nicht erreicht werden. Somit gelingt es erstmals, die eingangs erwähnten guten Eigenschaften wäßriger Epoxidharzsysteme bei Härtung mit Aminourethanen in Kombination mit herkömmlichen wäßrigen Härtern beizubehalten bei gleichzeitiger deutlicher Verminderung der Thermoplastizität, was zu einer erheblichen Verbesserung der Naß- und auch der Trockenschleifbarkeit führt.

### Beispiele zur Herstellung der Aminourethane (A) bzw. der neuartigen Härtungsmittel:

Die folgenden Beispiele sollen die Erfindung erläutern, aber nicht einschränken. Vor allem können nicht sämtliche denkbaren Verfahrens-Varianten durch entsprechende Beispiele aufgezeigt werden.

Folgende Abkürzungen werden verwendet:

| **Abk. für Amine** | |
|---|---|
| EDA | Äthylendiamin |
| mXDA | meta-Xylylendiamin |
| DMAPA | N,N-Dimethylaminopropylamin |
| DETA | Diäthylentriamin |
| IPDA | Isophorondiamin |

| **Abk. für Lösemittel** | |
|---|---|
| BuGl | Butylglykol |
| MeGl | Methylglykol |
| BuDiGl | Butyldiglykol |
| IPP | Isopropoxypropanol |
| BZA | Benzylalkohol |

| **Abk. für weitere Begriffe** | |
|---|---|
| BDC | siehe Beispiel 1.1 |
| AZ | Aminzahl (mg KOH/g) |
| EV | Epoxidäquivalentgewicht (g/mol) |
| Schmp. | Schmelzpunkt |

### 1. Herstellung isolierter Aminourethane (A)

**1.1** 229 g BDC (Umsetzungsprodukt des Diglycidyläthers von Bisphenol A mit Kohlendioxid bis zum vollständigen Verschwinden der Epoxidgruppen) wird in 190 g einer 1:1-Mischung von BuGl und IPP bei 140 °C angelöst. Man senkt die Temperatur auf 125 °C und gibt zu der klaren Lösung während 15 Minuten langsam 25,8 g DETA hinzu und hält bei 120 °C, bis eine konstante AZ von etwa 27 erreicht worden ist. Man senkt die Temperatur nun auf 110 °C und gibt während 20 Minuten 30,1 g EDA zu. Dabei beobachtet man eine leichte Exothermie, die Viskosität steigt. Die AZ beträgt nach beendeter Zugabe 88. Nun werden im Vakuum (ca. 20 Torr) bis max. 140 °C flüchtige Bestandteile abdestilliert (etwa 159 g in der Vorlage, aminhaltig), als Rückstand verbleiben 312 g Produkt, AZ 97, Gehalt 66 %.
**1.2** 229 g BDC werden mit 120 g MeGl auf 120 °C erwärmt und bei dieser Temperatur unter gutem Rühren gehalten. Zu der bald fast klaren Lösung gibt man bei 100 °C gleichmäßig innerhalb von 10 Minuten 128 g IPDA zu und hält, bis die AZ den konstanten Wert von 62 erreicht. Nun destilliert man i.Vak. bis maximal 120 °C das Lösemittel (Vorlage 74 g) soweit ab, daß der Rückstand gerade noch rührbar bleibt, und erhält 395 g eines Produktes mit der AZ 73 (theor. 79), welches noch 8 % Lösemittel enthält. Der Schmp. liegt bei 51 °C.
**1.3** Eine wie in 1.2 beschrieben hergestellte Lösung von BDC wird zuerst mit 25,8 g DETA bis zur AZ 35, dann mit 85,2 g IPDA bis zur AZ 91 umgesetzt. Nach Abdestillieren flüchtiger Verbindungen verbleiben 359 g Produkt mit AZ 114, 6 % Restlösemittel und Schmp. 56 °C.
**1.4** Eine wie in 1.2 beschrieben hergestellte Lösung von BDC wird zuerst mit 15,0 g EDA bis zur AZ < 4, dann mit 85,2 g IPDA bis zur AZ 65 umgesetzt. Nach Abdestillieren flüchtiger Verbindungen verbleiben 353 g Produkt mit AZ 81, 5 % Restlösemittel und Schmp. 50 °C.
**1.5** Eine wie in 1.2 beschrieben hergestellte Lösung von 916 g BDC in 404 g MeGl wird zuerst mit 103 g DETA bis zur AZ 39, dann mit 120 g EDA bis zur AZ 106 umgesetzt. Nach Abdestillieren flüchtiger Verbindungen verbleiben 1176 g Produkt mit AZ 116 und 22 % Restlösemittel, Schmp. unter Raumtemperatur.
**1.6** Eine wie in 1.2 beschrieben hergestellte Lösung von BDC wird mit 102 g mXDA bis zur AZ 65 umgesetzt. Nach Abdestillieren flüchtiger Verbindungen verbleiben 364 g Produkt mit AZ 77, 9 % Restlösemittel und Schmp. 51 °C.
**1.7** Eine wie in 1.2 beschrieben hergestellte Lösung von BDC wird zuerst mit 25,8 g DETA bis zur AZ 40, dann mit 68 g mXDA bis zur AZ 101 umgesetzt. Nach Abdestillieren flüchtiger Verbindungen verbleiben 331 g Produkt mit AZ 125, 4 % Restlösemittel und Schmp. 51 °C.
**1.8** Eine wie in 1.2 beschrieben hergestellte Lösung von BDC wird zuerst mit 15,0 g EDA bis zur AZ < 4, dann mit 68 g mXDA bis zur AZ 69 umgesetzt. Nach Abdestillieren flüchtiger Verbindungen verbleiben 318 g Produkt mit AZ 86, 4 % Restlösemittel und Schmp. 58 °C.
**1.9** Eine wie in 1.2 beschrieben hergestellte Lösung von BDC wird mit 60,0 g EDA bis zur AZ 76 umgesetzt. Nach Abdestillieren flüchtiger Verbindungen verbleiben 369 g Produkt mit AZ 82, 11 % Restlösemittel und Schmp. 53 °C.
**1.10** Eine wie in 1.2 beschrieben hergestellte Lösung von BDC wird mit 103 g mXDA bis zur AZ 171 umgesetzt. Nach Abdestillieren flüchtiger Verbindungen verbleiben 420 g Produkt mit AZ 203, 1,5 % Restlösemittel und Schmp. 42 °C.
**1.11** Eine Lösung von 229 g BDC in 95 g BZA wird zuerst mit 25,8 g DETA bis zur AZ 35, dann mit 30,0 g EDA bis zur AZ 105 umgesetzt. Man erhält 380 g Produkt mit AZ 103, welches 25 % BZA enthält und bei Raumtemperatur hochviskos ist.
**1.12** Eine Lösung von 229 g BDC in 95 g BuGl wird zuerst mit 25,8 g DETA bis zur AZ 34, dann mit 30,0 g EDA bis zur AZ 106 umgesetzt. Man erhält 380 g Produkt mit AZ 102, welches 25 % BuGl enthält und bei Raumtemperatur hochviskos ist.
**1.13** Eine Lösung von 229 g BDC in 95 g BuDiGl wird zuerst mit 25,8 g DETA bis zur AZ 39, dann mit 30,0 g EDA bis zur AZ 107 umgesetzt. Man erhält 380 g Produkt mit AZ 104, welches 25 % BuDiGl enthält und bei Raumtemperatur hochviskos ist.
**1.14** Eine wie in 1.2 beschrieben hergestellte Lösung von BDC wird zuerst mit 15,0 g EDA bis zu einer AZ < 4, dann mit einer Mischung von 22,6 g EDA und 16,3 g DMAPA bis zur AZ 75 umgesetzt. Nach Abdestillieren flüchtiger Verbindungen verbleiben 287 g Produkt mit AZ 87 und Schmp. 57 °C.
**1.15** Eine Lösung von 229 g BDC in 100 g MeGl wird mit 111 g ®Jeffamin EDR-148 bis zur AZ 63 umgesetzt. Nach Abdestillieren des Lösemittels erhält man 440 g Produkt mit AZ 102 und einem MeGl-Gehalt von 6 %.
**1.16** Eine Lösung von 229 g BDC in 100 g MeGl wird mit 134 g mXDA bis zur AZ 120 umgesetzt. Nach Abdestillieren des Lösemittels erhält man 463 g Produkt mit AZ 145 und einem MeGl-Gehalt von 7 %.

### 2. Herstellung des Härtungsmittels

**2.1** 43,8 g IPDA, 35,2 g mXDA und 131,6 g Produkt aus Beispiel 1.12 - welches 25 % BuGl enthält - werden unter gutem Rühren auf 70 °C erwärmt. Die nun klare Mischung (AZ = 95) wird mit 155,2 g eines epoxyfunktionellen Emulgators (EV-Wert 420 g/val), wie er in Hoe DE-A 43 10 198 (Beispiel I.4) beschrieben ist, umgesetzt, wobei eine deutliche Exothermie auftritt. Die immer noch klare Mischung wird mit 59 g Wasser auf 80 % Festkörper eingestellt und weist eine AZ von 166 und eine Viskosität (25 °C) von ca. 28.000 mPas auf. Das Produkt enthält 7,8 % BuGl.
**2.2** 149 g BDC werden in 62 g BuGl bei 100 °C vorgelegt und mit 16,8 g DETA bis zu einer AZ von 40, anschließend mit EDA bis zu einer AZ von 121 umgesetzt. Nun kühlt man auf 70 °C und gibt 82,5 g IPDA und 66,3 g mXDA zu, gefolgt von 292 g des unter 2.1 beschriebenen Polyepoxids. Nach Abklingen der Exothermie wird noch eine Stunde bei 70 °C gehalten und mit 96 g Wasser auf 80 % Festkörper eingestellt. Das klare Produkt enthält 8 % BuGl und weist eine AZ von 181 und eine Viskosität (25 °C) von 36.000 mPas auf.
**2.3** 183g BDC werden mit 61 g BuGl bei 115 °C suspendiert und bei dieser Temperatur während einer Stunde ein Gemisch von 65,8 g mXDA und 116 g IPDA zudosiert. Der nun nahezu klare Ansatz weist eine AZ von 202 auf. Bei 75 °C trägt man während 30 min 144 g des unter 2.1 beschriebenen Polyepoxids ein und verdünnt den nun trüben Ansatz mit Wasser auf 80 % Festkörper. Die klare hochviskose Lösung hat eine AZ von 136.
**2.4** 192 g BDC werden zusammen mit 52 g BuGl und 165 g IPDA homogenisiert und bei 125 °C gehalten, bis die AZ 154 ereicht wird. Das hochviskose Produkt wird auf 80 °C gekühlt und während 20 min gleichmäßig mit n-Butylglycidyläther versetzt, eine leichte Exothermie tritt auf. Nun gibt man 175 g eines Kondensationsproduktes aus PEG 1000 und einem Gemisch aus Bisphenol-A- und Bisphenol-F-Diglycidyläther (EV 415), gefolgt von 30 g mXDA. Man kühlt auf 70 °C und verdünnt mit 50 g 2-Propanol und 37 g Wasser, um eine klare, hochviskose Flüssigkeit mit AZ 117 zu erhalten.
**2.5** 149 g BDC werden bei 120 °C mit 62 g BuGl suspendiert und zuerst mit 17 g DETA bis zur AZ 40, dann mit 20 g EDA bis zur AZ 119 umgesetzt. Nach Kühlen auf 70 °C erfolgt die Zugabe von 82,5 g IPDA und 66,5 g mXDA, gefolgt von 292 g des unter 2.1 beschriebenen Polyepoxids, welches aber diesmal auf den EV-Wert 410 kondensiert wurde. Nach Zugabe von Wasser erhält man ein klares, hochviskoses Produkt mit AZ 204.

### 3. Beispiele für die Anwendung als Schleiffüller

### 3.1 Herstellung eines Füllers

48,5 g eines Aminourethans entsprechend Beispiel 2.1 und 350 g VE-Wasser werden gut miteinander vermischt. Zu der Mischung werden 13 g eines handelsüblichen Polyurethanverdickers und 1,3 g eines Korrosionsinhibitors gegeben und ebenfalls gut vermischt. In dieser Mischung werden folgende Pigmente und Füllstoffe in üblicher Weise dispergiert:
32 g Siliciumdioxid
114 g Bariumsulfat
95 g Aluminiumsilikat
104 g Titandioxid
5 g Eisenoxidgelb

Zu der so erhaltenen Polyaminkomponente werden kurz vor der Applikation 238 g eines handelsüblichen wäßrigen Epoxidharzes (50%ig, ®Beckopox EP 384 der Fa. Hoechst AG) zugegeben und beide Komponenten intensiv durch Rühren vermischt.

### 3.2. Herstellung eines Füllers

### (Vergleichsbeispiel)

Die Herstellung der Polyaminkomponente erfolgt analog Beispiel 2.2, nur mit dem Unterschied, daß 37 g des handelsüblichen Polyaminhärters mit 334 g VE-Wasser, ohne Aminourethanzusatz, vermischt werden.

### Applikation der Überzugsmittel

Die Füller-Überzugsmittel werden jeweils auf mit Kataphoresegrundierung vorbeschichtete Stahlsubstrate aufgespritzt und 1/2 Stunde bei 60 °C getrocknet.

Die Eigenschaften der erhaltenen Überzüge sind in der folgenden Tabelle zusammengefaßt:

| Schichtdicke in µm | **Füller 3.1** 30/130 | **Füller 3.2** (Vergleich) 30/60 |
|---|---|---|
| Naßschliff | ++/++ | +/- |
| Trockenschliff | ++/++ | +/- |
| ++ sehr gut * gut - schlecht -- sehr schlecht | | |

## Patentansprüche

1. Wasserverdünnbare Epoxid-Amin-Addukte, erhältlich durch Umsetzung von
(A) Aminourethanen, die durch Umsetzung von
(a1) oligomeren oder polymeren Verbindungen, welche mindestens eine endständige 2-Oxo-1,3-dioxolangruppe enthalten, und
(a2) Verbindungen, die mindestens eine primäre Aminogruppe enthalten, erhalten werden, wobei das Verhältnis der Zahl der 2-Oxo-1,3-dioxolangruppen zu der der primären Aminogruppen 1:10 bis 1:1,1 beträgt,
(B) hydrophilen Epoxidharzen, die Kondensationsprodukte aus
(b1) einem Polyol mit einer gewichtsmittleren Molmasse M_{w} von 200 bis 20 000 g/mol und
(b2) einer Epoxidverbindung mit mindestens zwei Epoxidgruppen pro Molekül und einer Molmasse, dividiert durch die Zahl der Epoxidgruppen, (Epoxidäquivalentgewicht)von 100 bis 2000 g/mol,
wobei das Verhältnis der Zahl der OH-Gruppen zur Zahl der Epoxidgruppen 1:3,51 bis 1:10 beträgt, und das Epoxidäquivalentgewicht dieser Kondensationsprodukte zwischen 150 g/mol und 8000 g/mol liegt, sowie gegebenenfalls
(C) Aminen mit mindestens einer primären Aminogruppe.

2. Wasserverdünnbare Epoxid-Amin-Addukte nach Anspruch 1, dadurch gekennzeichnet, daß die Amine (a2) und gegebenenfalls die Amine (C) voneinander unabhängig ausgewählt sind aus den Gruppen
(c1) primäre Diamine,
(c2) Amine mit drei oder mehr primären Aminogruppen,
(c3) primäre Diamine, die weitere sekundäre und/oder tertiäre Aminogruppen enthalten,
(c4) Amine mit drei oder mehr primären Aminogruppen, die weitere sekundäre und/oder tertiäre Aminogruppen enthalten.

3. Wasserverdünnbare Epoxid-Amin-Addukte nach Anspruch 1, dadurch gekennzeichnet daß die Amine (a2) und gegebenenfalls die Amine (C) voneinander unabhängig ausgewählt sind aus der Gruppen der Polyalkylenpolyamine, der Polyoxyalkylenpolyamine, der Polyaminoalkylaromaten, der Cycloalkylenpolyamine und der Umsetzungsprodukte von Di- oder Polyaminen mit Verbindungen, die mindestens eine endständige Epoxygruppe aufweisen.

4. Wasserverdünnbare Epoxid-Amin-Addukte nach Anspruch 1, dadurch gekennzeichnet, daß die Verbindungen (a1) mit mindestens einer cyclischen Carbonatgruppe durch Umsetzung von Verbindungen mit mindestens einer Epoxygruppe mit Kohlendioxid erhältlich sind.

5. Wasserverdünnbare Epoxid-Amin-Addukte nach Anspruch 1, dadurch gekennzeichnet, daß die Verbindungen (a1) mit mindestens einer cyclischen Carbonatgruppe durch Umsetzung von Glycidyläthern mehrwertiger Alkohole oder Phenole, deren Hydrierungsprodukten oder Novolaken mit Kohlendioxid erhältlich sind.

6. Wasserverdünnbare Epoxid-Amin-Addukte nach Anspruch 1, dadurch gekennzeichnet, daß bei der Synthese der Aminourethane das Verhältnis der Anzahl der cyclischen Carbonatgruppen zu der Anzahl der primären Aminogruppen 1 : 5 bis 1 : 1,5 beträgt.

7. Wasserverdünnbare Epoxid-Amin-Addukte nach Anspruch 1, dadurch gekennzeichnet, daß die wasserverdünnbaren Epoxidverbindungen Kondensationsprodukte sind aus aliphatischen Polyhydroxyverbindungen mit einer gewichtsmittleren molaren Masse von 200 bis 20 000 g/mol und Epoxiden mit mindestens zwei Epoxygruppen und einem Epoxid-Äquivalentgewicht von 100 bis 2000 g/mol, wobei die Polyhydroxyverbindungen ausgewählt sind aus der Gruppe der Polyhydroxypolyäther, der Polyhydroxypolyester, der Polyhydroxypolyesteramide, der Polyhydroxypolycarbonate und der Polyhydroxypolyolefine, bevorzugt aus den Polyhydroxypolyäthern, besonders bevorzugt aus den Polyoxyalkylenglykolen, und unter diesen bevorzugt den Polyäthylenglykolen.

8. Wasserverdünnbare Epoxid-Amin-Addukte nach Anspruch 1, dadurch gekennzeichnet, daß bei der Synthese der wasserverdünnbaren Epoxyverbindungen das Verhältnis der Anzahl der Hydroxylgruppen von (b1) zu der Anzahl der Epoxygruppen von (b2) 1 : 4 bis 1 : 8 beträgt.

9. Verwendung der wasserverdünnbaren Epoxid-Amin-Addukte nach Anspruch 1 als Härter für wäßrige Epoxidharzsysteme.

10. Verwendung der wasserverdünnbaren Epoxid-Amin-Addukte nach Anspruch 1 als Härter für wäßrige Epoxidharzsysteme in Schleiffüllern.

## Claims

1. A water-dilutable epoxy-amine adduct obtainable by reacting
(A) aminourethanes obtained by reacting
(a1) oligomeric or polymeric compounds which comprise at least one terminal 2-oxo-1,3-dioxolane group and
(a2) compounds which comprise at least one primary amino group,
the ratio of the number of 2-oxo-1,3-dioxolane groups to the number of primary amino groups being from 1:10 to 1:1.1,
(B) hydrophilic epoxy resins, the condensation products of
(b1) a polyol having a weight-average molar mass M_{w} of from 200 to 20,000 g/mol and
(b2) an epoxide compound having at least two epoxide groups per molecule and a molar mass, divided by the number of epoxide groups (epoxide equivalent weight), of from 100 to 2000 g/mol,
the ratio of the number of OH groups to the number of epoxide groups being from 1:3.51 to 1:10, and the epoxide equivalent weight of these condensation products lying between 150 g/mol and 8000 g/mol, and also, if desired,
(C) amines having at least one primary amino group.

2. A water-dilutable epoxy-amine adduct as claimed in claim 1, wherein the amines (a2) and, if desired, the amines (C) are selected independently of one another from the groups consisting of
(c1) primary diamines,
(c2) amines having three or more primary amino groups,
(c3) primary diamines containing further secondary and/or tertiary amino groups,
(c4) amines having three or more primary amino groups and containing further secondary and/or tertiary amino groups.

3. A water-dilutable epoxy-amine adduct as claimed in claim 1, wherein the amines (a2) and, if desired, the amines (C) are selected independently of one another from the groups consisting of the polyalkylenepolyamines, polyoxyalkylenepolyamines, polyaminoalkylaromatic compounds, cycloalkylenepolyamines and reaction products of di- or polyamines with compounds containing at least one terminal epoxide group.

4. A water-dilutable epoxy-amine adduct as claimed in claim 1, wherein the compounds (a1) having at least one cyclic carbonate group are obtainable by reacting compounds having at least one epoxide group with carbon dioxide.

5. A water-dilutable epoxy-amine adduct as claimed in claim 1, wherein the compounds (a1) having at least one cyclic carbonate group are obtainable by reacting glycidyl ethers of polyhydric alcohols or phenols, hydrogenation products thereof or novolaks with carbon dioxide.

6. A water-dilutable epoxy-amine adduct as claimed in claim 1, wherein in the synthesis of the aminourethanes the ratio of the number of cyclic carbonate groups to the number of primary amino groups is from 1 : 5 to 1 : 1.5.

7. A water-dilutable epoxy-amine adduct as claimed in claim 1, wherein the water-dilutable epoxy compounds are condensation products of aliphatic polyhydroxy compounds having a weight-average molar mass of from 200 to 20,000 g/mol with epoxides having at least two epoxide groups and an epoxide equivalent weight of from 100 to 2000 g/mol, the polyhydroxy compounds being selected from the group consisting of the polyhydroxypolyethers, polyhydroxypolyesters, polyhydroxypolyesteramides, polyhydroxypolycarbonates and polyhydroxypolyolefins, preferably the polyhydroxypolyethers, particularly preferably the polyoxyalkylene glycols, and among these preferably the polyethylene glycols.

8. A water-dilutable epoxy-amine adduct as claimed in claim 1, wherein in the synthesis of the water-dilutable epoxy compounds the ratio of the number of hydroxyl groups of (b1) to the number of epoxide groups of (b2) is from 1 : 4 to 1 : 8.

9. The use of a water-dilutable epoxy-amine adduct as claimed in claim 1 as a curing agent for aqueous epoxy resin systems.

10. The use of a water-dilutable epoxy-amine adduct as claimed in claim 1 as a curing agent for aqueous epoxy resin systems in sanding fillers.

## Revendications

1. Adduits époxyde à fonctionnalité amino diluables à l'eau, que l'on peut obtenir par réaction
A) d'aminouréthannes, obtenus par réaction
(a1) de composés oligomères ou polymères lesquels contiennent au moins un groupe 2-oxo-1,3-dioxolane terminal, sur
(a2) des composés lesquels contiennent au moins un groupe amino primaire,
le rapport entre le nombre des groupes 2-oxo-1,3-dioxolane et des groupes amino primaires étant de 1:10 à 1:1,1,
(B) de résines époxydes hydrophiles, lesquelles sont des produits de condensation
(b1) d'un polyol ayant une masse molaire moyenne en poids M_{w} de 200 à 20000 g/mole et
(b2) d'un composé époxyde comportant au moins deux groupes époxyde par molécule et ayant une masse molaire divisée par le nombre de groupes époxyde (poids équivalent d'époxyde) de 100 à 2000 g/mole,
le rapport du nombre des groupes OH au nombre des groupes époxyde étant de 1:3,51 à 1:10, et le poids équivalent d'époxyde de ces produits de condensation étant compris entre 150 g/mole et 8000 g/mole, ainsi qu'éventuellement
(C) d'amines comportant au moins un groupe amino primaire.

2. Adduits époxydes à fonctionnalité amino diluables à l'eau selon la revendication 1, caractérisés en ce que les amines (a2) et éventuellement les amines (C) sont choisis indépendamment l'un de l'autre dans les groupes de
(c1) diamines primaires,
(c2) amines comportant trois ou plus de trois groupes amino primaires,
(c3) diamines primaires, lesquelles contiennent d'autres groupes amino secondaires et/ou tertiaires,
(c4) amines comportant trois ou plus de trois groupes amino primaires, lesquelles contiennent d'autres groupes amino primaires et/ou secondaires.

3. Adduits époxydes à fonctionnalité amino diluables à l'eau selon la revendication 1, caractérisés en ce que les amines (a2) et éventuellement les amines (C) sont choisis indépendamment l'un de l'autre dans les groupes comprenant les polyalkylène-polyamines, les polyoxyalkylène-polyamines, les polyaminoalkylaromatiques, les cycloalkylènepolyamines et les produits de réaction de di- ou polyamines sur des composés lesquels présentent au moins un groupe époxyde terminal.

4. Adduits époxydes à fonctionnalité amino diluables à l'eau selon la revendication 1, caractérisés en ce que l'on peut obtenir les composés (a1) comportant au moins un groupe carbonate cyclique par réaction de composés comportant au moins un groupe époxyde sur le dioxyde de carbone.

5. Adduits époxydes à fonctionnalité amino diluables à l'eau selon la revendication 1, caractérisés en ce que l'on peut obtenir les composés (a1) comportant au moins un groupe carbonate cyclique par réaction d'éthers glycidyliques d'alcools ou de phénols multifonctionnels, de leurs produits d'hydrogénation ou de novolaques sur le dioxyde de carbone.

6. Adduits époxydes à fonctionnalité amino diluables à l'eau selon la revendication 1, caractérisés en ce que, dans la synthèse des aminouréthannes, le rapport du nombre des groupes carbonate cyclique au nombre des groupes amino primaire est de 1:5 à 1:1,5.

7. Adduits époxydes à fonctionnalité amino diluables à l'eau selon la revendication 1, caractérisés en ce que les composés époxydes diluables à l'eau sont des produits de condensation de composés polyhydroxyliques aliphatiques ayant une masse molaire moyenne en poids de 200 à 20000 g/mole et d'époxydes comportant au moins deux groupes époxyde et présentant un poids équivalent d'époxyde de 100 à 2000 g/mole, les composés polyhydroxyliques étant choisis dans le groupe comportant des polyhydroxy-polyéthers, des polyhydroxy-polyesters, des polyhydroxy-polyesteramides, des polyhydroxy-polycarbonates et des polyhydroxy-polyoléfines, de préférence parmi les polyhydroxy-polyéthers, de manière particulièrement préférée parmi les polyoxyalkylène glycols, et parmi ceux-ci, de préférence parmi les polyéthylène glycols.

8. Adduits époxydes à fonctionnalité amino diluables à l'eau selon la revendication 1, caractérisés en ce que, dans la synthèse des composés époxyde diluables à l'eau, le rapport du nombre des groupes hydroxyle de (b1) au nombre de groupes époxy de (b2) est de 1:4 à 1:8.

9. Utilisation des adduits époxydes à fonctionnalité amino diluables à l'eau selon la revendication 1 en tant que durcisseurs de systèmes aqueux de résines époxydes.

10. Utilisation des adduits époxydes à fonctionnalité amino diluables à l'eau selon la revendication 1 en tant que durcisseurs de systèmes de résines époxydes dans des charges de meulage.
